# EUROPÄISCHE PATENTSCHRIFT

(11) **EP 2 918 147 B1**
(45) Veröffentlichungstag und Bekanntmachung des Hinweises auf die Patenterteilung: **12.07.2017**
(21) Anmeldenummer: 13792870.1
(22) Anmeldetag: 08.11.2013
(51) Int. Cl.: B23K 37/02, H05H 1/46, H05H 1/30, B23K 10/02

(54) **PLASMAWERKZEUG, WERKZEUGMASCHINE, BEARBEITUNGSVERFAHREN**
PLASMA TOOL, MACHINE TOOL, MACHINING METHOD
OUTIL A PLASMA, MACHINE-OUTIL ET PROCÉDÉ D'USINAGE

(30) Priorität: 08.11.2012 DE 102012220353
(43) Veröffentlichungstag der Anmeldung: 16.09.2015
(73) Patentinhaber: Sauer Ultrasonic Gmbh, 55758 Stipshausen (DE)
(72) Erfinder: FEUCHT, Florian, 73453 Abstgmünd (DE)
(74) Vertreter: Beetz & Partner mbB
(86) Internationale Anmeldenummer: PCT/EP2013/073360
(87) Internationale Veröffentlichungsnummer: WO 2014/072459

(56) Entgegenhaltungen:
- WO-A1-2010/111695
- WO-A1-2013/055813
- WO-A2-2006/099190
- US-A- 3 471 674
- US-A- 4 854 551
- US-A1- 2001 019 042
- US-A1- 2002 144 786
- US-A1- 2005 061 774
- US-A1- 2006 102 606
- US-A1- 2007 284 342

## Beschreibung

Die Erfindung betrifft ein Werkzeug, eine Werkzeugmaschine und ein Bearbeitungsverfahren für Werkstücke nach den Oberbegriffen der unabhängigen Patentansprüche.

Es ist bekannt, Werkstückoberflächen mittels Plasma zu bearbeiten. Diese Bearbeitung kann unterschiedliche Zwecke haben. Sie kann dem Reinigen der Werkstückoberfläche dienen oder dem Materialabtrag oder der Oberflächenbeschichtung oder der Oberflächenmodifikation. Hierfür sind Werkzeuge erhältlich, die einen Plasmagenerator enthalten und die einen geeigneten Plasmaauslass haben, über den das generierte Plasma der Werkstückoberfläche zugeführt werden kann. Das Werkzeug wird manuell oder von einem Roboter automatisch gesteuert geführt.

Bei der manuellen Führung ist die unzureichende Präzision der Bearbeitung ein Problem. Darüber hinaus ist es aufwendig. Auch aufwendig ist es aber, eine eigene Maschine wie einen Roboter vorzusehen, mittels derer ein Werkzeug, das für die Plasmabearbeitung einer Werkstückoberfläche geeignet ist, automatisch über die Werkstückoberfläche geführt werden kann.

Die WO2010/111695 A1 beschreibt ein Plasmaschneidsystem, bei dem ein Schneidkopf in einer Ebene führbar ist.

Die US 4854551 A beschreibt eine Plasmaschneidmaschine.

Die US 2007/284342 A1 beschreibt ein Ve4rfahren und eine Vorrichtung für die Plasmabearbeitung. sie weist einen beweglichen Plasmagenerator und einen Stellmechanismus dafür auf.

Die US 2005/061774 A1 beschreibt eine Gerätschaft, die induktiv aufgeladenes Plasma verwendet.

Aufgabe der Erfindung ist es, ein Werkzeug, eine Werkzeugmaschine und ein Bearbeitungsverfahren anzugeben, die die einfache Umsetzung von Plasmabearbeitungsverfahren von Werkstücken ermöglichen.

Diese Aufgabe wird mit den Merkmalen der unabhängigen Patentansprüche gelöst. Abhängige Patentansprüche sind auf bevorzugte Ausführungsformen der Erfindung gerichtet.

Ein Werkzeug zum Bearbeiten eines Werkstücks in einer Bearbeitungsmaschine hat einen vorzugsweise genormten Verbindungsbereich zum Verbinden des Werkzeugs mit einem korrespondierenden Anschluss einer numerisch gesteuerten Werkzeugmaschine, eine Fluidführung zum Führen eines erzeugten Plasmas oder eines sonstigen Fluids oder Partikelstroms und einen am Ende der Fluidführung liegenden Auslassbereich mit einem oder mehreren Auslässen zum Zuführen des Plasmas bzw. Fluids zu einer Werkstückoberfläche.

Das Werkzeug hat im Verbindungsbereich einen Prozessgasanschluss und einen Plasmagenerator, der mit dem Prozessgasanschluss und der Plasmaführung verbunden ist. Es ist eine Energieversorgung zum Zuführen elektrischer Energie vorgesehen. Sie weist eine drahtlos-induktive Energieversorgung auf.

Mit einem solchen Werkzeug kann eine herkömmliche Werkzeugmaschine für die Plasmabearbeitung eines Werkstücks verwendet werden. Es können herkömmliche Steuerungsalgorithmen verwendet werden. Auch können existierende Energieversorgungssysteme zur Versorgung eines Werkzeugs mit Energie (über eine sich womöglich drehende Schnittstelle hinweg) verwendet werden.

Eine Werkzeugmaschine hat einen Maschinenrahmen, einen Werkzeuganschluss für ein Werkzeug wie oben angesprochen und einen Prozessgasanschluss für das Werkzeug, der einen werkzeugseitigen Prozessgasauslass und eine stromaufwärts vom Auslass gelegene Umschalteinrichtung umfasst, die mit dem Auslass verbunden ist und zur wahlweisen gesteuerten Verbindung des Auslasses mit einer Prozessgasführung oder einer Kühlmittelführung oder ggf. auch einer Spülmittelquelle der Maschine oder anderen Fluiden ausgelegt ist. Es kann eine Reinigungseinrichtung für den Auslass und die Umschalteinrichtung vorgesehen sein.

Auf diese Weise kann eine schon existierende maschinenseitige Fluidführung (etwa für Kühlfluid, Schmiermittel) einschließlich der Schnittstelle zum Werkzeug hin zur Zuführung des Prozessgases zum Werkzeug verwendet werden. In der Maschine ist im stationären Teil eine Umschaltung vorgesehen, mittels derer gewählt werden kann, welches Fluid über die Fluidführung dem Werkzeug zugeführt wird. Bei herkömmlichen Werkzeugen kann dies ein Kühl- oder Schmiermittel sein. Beim erfindungsgemäßen Werkzeug ist es das Prozessgas.

Der Anschluss des Werkzeugs an die Werkzeugmaschine erfolgt an einer entsprechenden Schnittstelle der in der Regel drehbaren Spindel. In der Regel ist der Anschluss nach HSK ausgebildet. Die Spindel selbst ist in der Regel drehbar und kann während des Einsatzes des Plasmawerkzeugs auch in Drehbewegung mit gewünschter steuerbarer Drehzahl versetzt werden. Die Fluidführung geht von der Maschine zum Werkzeug über eine drehdichte Verbindung in der Spindel hinweg. Auch insoweit können die existierenden Strukturen (für Kühl- oder Schmiermittel) verwendet werden.

Bei einem Verfahren zur Bearbeitung eines Werkstücks in einer Werkzeugmaschine mit einem Werkzeug wie oben wird der Werkstückoberfläche mittels des in der Werkzeugmsaschine angebrachten Werkzeugs ein Plasma zugeführt. Das Werkzeug kann wie herkömmliche Werkzeuge numerisch gesteuert über die Werkstückoberfläche geführt werden. Die Anbringung kann in der Maschinenspindel erfolgen. Das Werkzeug kann sich im Betrieb drehen. Dem Werkzeug kann das Prozessgas über einen auch für die Kühlmittelzufuhr zu einem Werkzeug verwendeten Anschluss zugeführt werden, wobei in der Werkzeugmaschine eine Umschaltung zwischen Prozessgaszufuhr und Kühlmittelzufuhr nach Maßgabe einer Steuerung stattfindet und wobei vor dem Verbinden des Werkzeugs ein Schritt des Reinigens, insbesondere Durchblasens der maschinenseitigen Zufuhr mit dem Prozessgas oder einem anderen Gas erfolgen kann.

Mit dem genannten Verfahren kann ein Plasmawerkzeug in einer herkömmlichen oder nur gering modifizierten numerisch gesteuerten Werkzeugmaschine verwendet werden, die auch andere Werkzeuge verwendet. Das Plasmawerkzeug kann dann als eines von vielen anderen Werkzeugen in ein Werkzeugmagazin einsortiert werden, von dort aus für die Werkzeugmaschine automatisch zugänglich sein, wie dies für andere Werkzeuge auch der Fall ist.

Nachfolgend werden Bezug nehmend auf die Zeichnungen einzelne Ausführungsformen der Erfindung beschrieben. Es zeigen:
Figur 1 eine perspektivische Ansicht eines Plasmawerkzeugs,
Figur 2 eine Seitenansicht eines Plasmawerkzeugs,
Figur 3 schematisch eine Werkzeugmaschine,
Figur 4 schematisch den inneren Aufbau eines Plasmawerkzeugs in einer Ausführungsform,
Figur 5 schematisch Komponenten der Werkzeugmaschine, und
Figur 6 einen weitere Art des inneren Aufbaus des Werkzeugs.

In der nachfolgenden Beschreibung und in den Figuren bedeuten gleiche Bezugsziffern gleiche Komponenten. Merkmale der Erfindung sollen auch dann als miteinander kombinierbar angesehen werden, wenn ihre Kombination nicht ausdrücklich erwähnt ist, soweit deren Kombination nicht technisch unmöglich ist. Beschreibungen von Verfahrensschritten sind auch als Beschreibungen von diese Verfahrensschritte implementierenden Vorrichtungen/Einrichtungen zu sehen und umgekehrt.

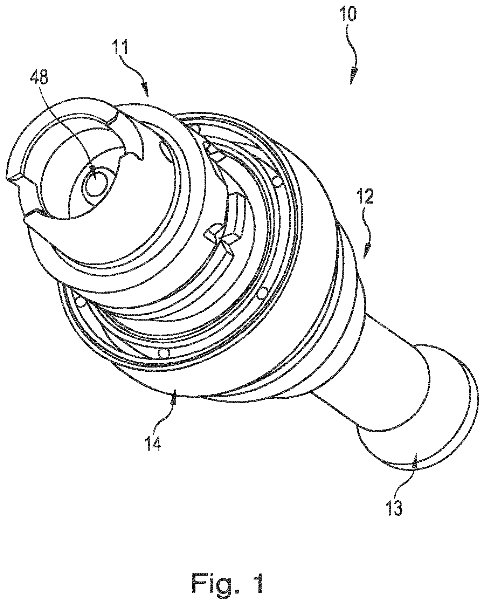

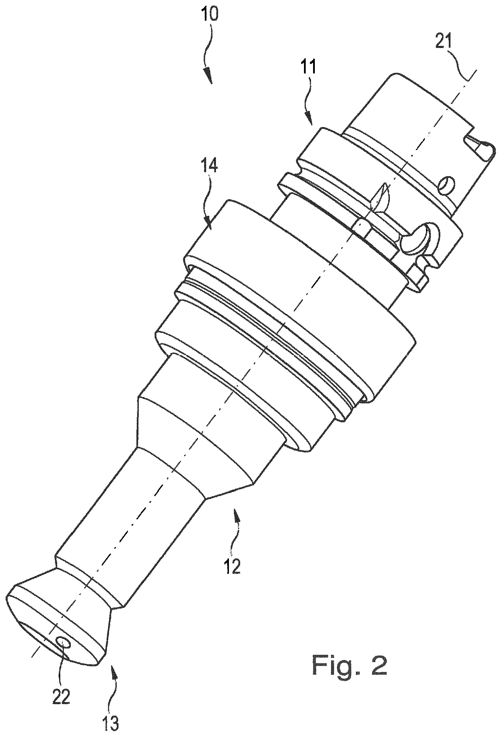

Figur 1 und Figur 2 zeigen schematisch in perspektivischer Ansicht und in Seitenansicht ein Werkzeug 10 zur Bearbeitung eines Werkstücks in einer Bearbeitungsmaschine. Das Werkzeug 10 weist einen maschinenseitigen Verbindungsbereich 11 auf und einen werkzeugseitigen Auslassbereich 13. Dazwischen kann ein Mittenbereich 12 für weitere Komponenten liegen. Im Inneren des Werkzeugs 10 befindet sich eine Plasmaführung, die Plasma dem Auslassbereich 13 zuführt, insbesondere dort Plasmaauslässen 22, die am Ende der Plasmaführung 44 liegen. Ein oder mehrere Plasmaauslässe 22 können im Auslassbereich 13 vorgesehen sein.

21 symbolisiert eine Werkzeugachse. Das Werkzeug kann rotationssymmetrisch bzw. rotationsinvariant aufgebaut sein. Es kann sich während des Betriebs drehen.

Der Verbindungsbereich 11 ist vorzugsweise entsprechend einer Norm aufgebaut. Es kann eine HSK-Konstruktion sein (DIN 69893) oder ein Steilkegel (DIN 69871). Der Verbindungsbereich 11 oder ein sonstiger Bereich des Werkzeugs kann ein Angriffsbereich für einen automatischen Werkzeugwechsler aufweisen.

Die Plasmaführung 44 führt ein Plasma dem Plasmaauslass/den Plasmaauslässen 22 zu. Das Plasma kann von außen zugeführt werden oder kann im Werkzeug 10 selbst generiert werden. Es kann Atmosphärendruckplasma sein, das aus Umgebungsluft generiert wird.

Man erhält auf diese Weise ein Werkzeug, das wie andere Werkzeuge auch in einer Werkzeugmaschine verwendet werden kann (also Einsetzen, Herausnehmen, translatorisches und/oder rotatorisches Führen längs/über der Werkstückoberfläche, Verwaltung im Magazin, Programmierung der Maschine, ...).

Wenn im Werkzeug selbst Plasma zu generieren ist, weist das Werkzeug einen Plasmagenerator 45 auf, der in dessen Mittelteil 12 untergebracht sein kann und einerseits elektrische und elektronische Komponenten, andererseits aber auch Komponenten des mechanischen Aufbaus umfassen kann. Komponenten Außerdem kann dann eine Energieversorgung 14, 43 vorgesehen sein. Die Energieversorgung ist vorzugsweise berührungslos/induktiv aufgebaut. Werkzeugseitig weist sie eine Empfangsspule 14 auf, die von einem magnetischen Wechselfeld durchsetzt wird. Sie weist weiterhin vorzugsweise eine Spannungsformungsschaltung 43a auf, die die an der Spule anstehende Wechselspannung in geeignete Größen umsetzt (Frequenz, Amplitude, Gleichanteil, ...). Die werkzeugseitige Spule 14 kann um die Achse 21 herum symmetrisch ausgebildet und angeordnet sein. Sie kann ringförmig ausgebildet sein.

Für die Zufuhr des Plasmas oder des noch nicht ionisierten Prozessgases kann ein zur Drehachse 21 konzentrischer Kanal verwendet werden. Es kann hier insbesondere ein Kanal verwendet werden, der sonst für andere Fluide anderer Werkzeuge verwendet wird, insbesondere ein Kanal für die Zufuhr von Kühlmittel und/oder Schmiermittel. Insoweit sind schon bekannte und standardisierte Aufbauten in Umlauf. Die Prozessgaszufuhr kann dementsprechend ausgebildet sein.

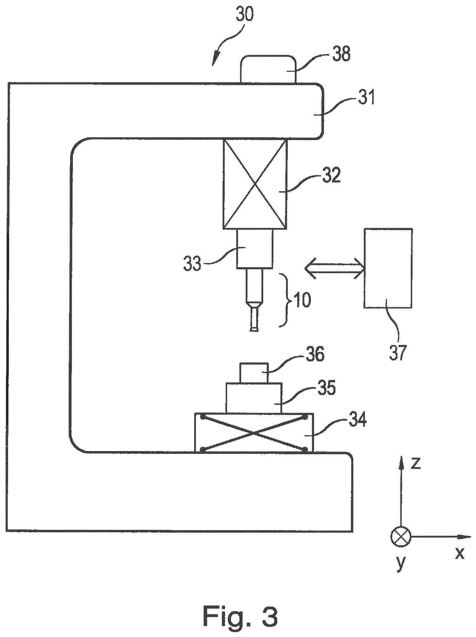

Figur 3 zeigt schematisch eine Werkzeugmaschine 30. 31 ist ein mehr oder minder steifer Maschinenrahmen. 32 symbolisiert eine Reihe von Stellgliedern, mit denen das Werkzeug 10 translatorisch und/oder rotatorisch verstellt und verschoben werden kann. 33 symbolisiert eine Spindel, die ein Werkzeug 10 in Drehbewegung versetzen kann. Das Werkzeug 10 ist wie oben oder nachfolgend beschrieben ausgebildet. 34 symbolisiert Stellglieder für einen Werkstücktisch 35, die gegebenenfalls auch den Werkstücktisch 35 translatorisch und/oder rotatorisch einstellen können. 36 symbolisiert das Werkstück selbst.

37 symbolisiert eine Steuerung/Regelung, die einerseits Signale zum Prozess hin sendet, insbesondere zu den einzelnen Stellgliedern 32, 34, und gegebenenfalls auch zum Werkzeug 10 selbst und gegebenenfalls auch zu anderen, nicht gezeigten Komponenten. Darüber hinaus kann sie auch Signale empfangen, insbesondere rückgekoppelte Signale von in Figur 3 nicht gezeigten Sensoren, auch ein oder mehrere Sensoren im Werkzeug. Die Steuerung 37 arbeitet nach Maßgabe eines Programms zur Bearbeitung eines Werkstücks 36.

38 symbolisiert eine Fluidquelle, insbesondere eine Prozessgasquelle oder Plasmaquelle. Dementsprechend existiert eine Fluidführung von der Quelle 38 über die Stellglieder 32 und die Spindel 33 hinweg bis hin zum Werkzeug 10. Das Prozessgas kann Umgebungsluft sein, gegebenenfalls auch gereinigte Umgebungsluft. Insoweit kann dann der Ansaugstutzen oder eine entsprechende Pumpe oder der Filterauslass als Quelle 38 angesehen werden. Die Quelle muss nicht fest am Maschinenrahmen 31 befestigt sein. Abhängig von der Art des Fluids kann sie auch näher am Werkzeug 10 liegen. Zwischen Werkzeug 10 und Spindel 33 liegen die genormten Werkzeugbefestigungsstrukturen (HSK, Steilkegel, ...).

Das System kann einen nicht gezeigten Fluidantrieb weisen, um das Fluid von der Quelle auf das Werkstück zu zu fördern. Er kann als Pumpe oder als unter Druck stehendes Reservoir eines komprimierbaren Fluids ggf. mit Flusssteuerungsventilen ausgebildet sein. Der Antrieb kann im Werkzeug selbst liegen oder in der Werkzeugmaschine.

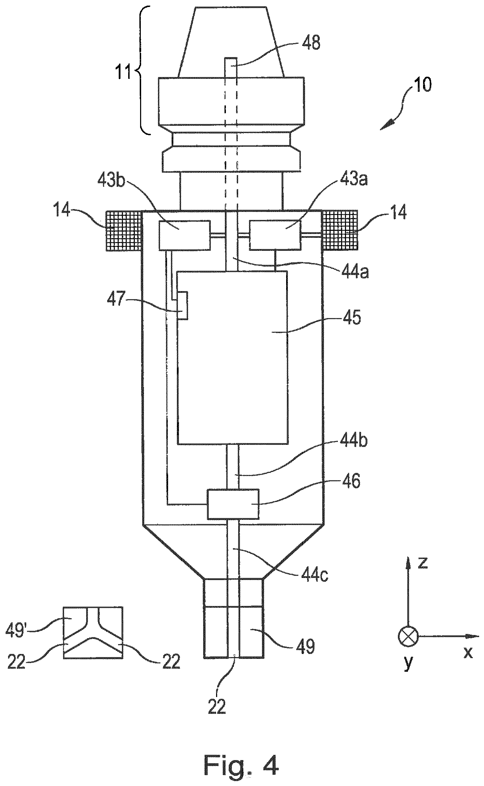

Figur 4 zeigt schematisch den Aufbau eines Werkzeugs 10 im Inneren. 48 symbolisiert den werkzeugseitigen Fluideinlass bzw. Prozessgaseinlass. Er kann im Verbindungsbereich 11 koaxial zur Werkzeugdrehachse 21 liegen und verlaufen. Er kann entsprechend einem Standard oder einer Norm aufgebaut sein, insbesondere so wie auch Kühlfluideinlässe oder Schmiermitteleinlässe anderer Werkzeuge aufgebaut sind. 45 symbolisiert einen Plasmagenerator, der mit einer stromaufwärtigen Fluidführung 44a und einer stromabwärtigen Fluidführung 44b verbunden ist. Über den Einlass 48 wird dem Generator 45 Prozessgas zugeführt.

14 symbolisiert eine Energiequelle. Es kann sich um eine induktiv Energie aufnehmende Spule/Ringspule handeln. 43a symbolisiert eine Spannungsformungsschaltung, die mit der Ringspule 14 verbunden ist. Sie kann zum Beispiel eine Gleichrichtung und ggf. eine anschließende Wechselrichtung umfassen sowie eine Amplitudensteuerung der auszugebenden Spannung. Die Spannungsformungsschaltung 43a versorgt den Plasmagenerator 45 mit der von ihm benötigten elektrischen Energie, ggf. auch den Fluidantrieb und sonstige Komponenten. Bei Zufuhr elektrischer Energie erzeugt der Plasmagenerator 45 aus oben einströmendem Prozessgas Plasma, das unten ausströmt. Im Inneren bzw. als Teil des Generators 45 können nicht gezeigte Steuerungs- und Regelungskomponenten, Stellglieder und mechanische oder elektrische/elektronische Einrichtungen vorgesehen sein.

Die Spule 14 wirkt mit einer stationären, nicht gezeigten Spule zusammen, die so ausgestaltet sein kann, dass sie nur über einen bestimmten Sektor der Ringspule 14 hinweg vorgesehen ist und dieser in geringem Abstand in z-Richtung gegenübersteht. Die nicht gezeigte Sendespule kann elektrisch und/oder mechanisch stationär mit der Werkzeugmaschine verbunden sein. Ihre Anbringung ist dabei insbesondere so, dass der Zugriff eines Werkzeugwechslers zum Werkzeug nicht gestört wird.

Die Systemauslegung kann so sein, dass dem Werkzeug nicht nur elektrische Energie zugeführt wird, sondern dass es auch Steuerungssignale erhält. Diese können dem Werkzeug zum Beispiel zugeführt werden, indem der zugeführten Wechselleistung für die Energieversorgung maschinenseitig Signale aufmoduliert werden, die dann werkzeugseitig demoduliert/decodiert und dann entsprechend verwendet werden. 43b symbolisiert hierfür eine Komponente, die durchaus vergleichsweise komplex aufgebaut sein kann. Es können auf diese Weise externe Befehle empfangen werden. Es kann dann entsprechend auf den Plasmagenerator 45 eingewirkt werden. Signale mit externen Komponenten können aber auch direkt über eine geeignete Funkschnittstelle oder eine leitungsgebundene Schnittstelle ausgetauscht werden.

Es können auch ein oder mehrere Flusssteuerungsventile 46 vorgesehen sein. Gezeigt ist ein Ventil stromabwärts des Generators 45. Auch stromaufwärts ist ein Ventil denkbar. Mehrere Ventile sind denkbar, die geeignet ansteuerbar sein können (an/aus oder auch graduell). Weiterhin ist es möglich, innerhalb des Werkzeugs eine Steuerung oder Regelung zu implementieren. 47 symbolisiert einen Sensor, der beispielsweise Zustandsgrößen am oder im Plasmagenerator 45 erfasst und der Schaltung 43b zuführt. Sie können dort entweder unmittelbar zur Generierung von Steuerungs-/Regelungssignalen verwendet werden, oder sie können an die Maschine rückübertragen und dort verwendet werden.

Figur 4 zeigt unten, dass der Auslassbereich 13 mit dem Plasmaauslass 22 als auswechselbares Teil 49 ausgebildet sein kann. Auf diese Weise können unterschiedliche Auslass- und ggf. auch Düsengestaltungen in einfacher Weise vorgesehen werden. 49' in Figur 4 unten links symbolisiert eine andere Auslassgestaltung als bei der Komponente 49. Bei 49 ist ein Auslass 22 gezeigt, der nach unten gerichtet ist (in axialer Richtung). In 49' dagegen sind Auslässe 22 gezeigt, die mehr oder minder seitlich gerichtet sind. Es kann auf diese Weise unterschiedlichen Bearbeitungssituationen bzw. -erfordernissen Rechnung getragen werden.

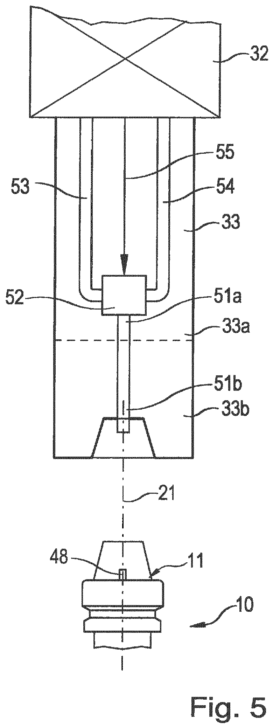

Figur 5 zeigt schematisch maschinenseitige Merkmale. Unten in Figur 5 ist - auch nur schematisch - der Verbindungsbereich 11 des Werkzeugs gezeigt. Oben ist der maschinenseitige Anschlussbereich gezeigt. Es kann sich um die Abtriebsseite einer Spindel handeln, also um ein sich im Betrieb drehenden Werkzeuganschluss 33b, der gegenüber einem stationären Teil 33a mit gewünschter Drehzahl angetrieben werden kann. Der maschinenseitige Anschluss 51 hin zum Werkzeug 10 liegt im sich drehenden Teil 33b. Über die Schnittstelle zwischen stationärem Teil 33a und sich drehendem Teil 33b hinweg läuft eine Gasführung 51 mit einem Teil 51a im stationären Teil und einem Teil 51b im sich drehenden Teil, die eine drehdichte Verbindung zueinander aufweisen. Sie kann im Übergangsbereich zwischen stationärem Teil 33a und sich drehendem Teil 33b koaxial zur Drehachse 21 liegen und verlaufen.

Im stationären Teil 33a kann eine Umschalteinrichtung 52 vorgesehen sein, die nach Maßgabe von Steuerungssignalen 55 arbeitet, die von der Steuerung 37 kommen können. Die Umschalteinrichtung 52 kann die Ausgangsseite (Leitungsführung 51a) wahlweise an eine von zwei oder mehreren Eingangsleitungsführungen 53, 54 anschließen. Diese Eingangsleitungsführungen 53, 54 können unterschiedliche Fluide zur Verfügung stellen, die dann mit der Umschalteinrichtung 52 ausgewählt werden können. Eine der Eingangsleitungsführungen 53 kann beispielsweise Kühlmittel und/oder Schmiermittel zur Verfügung stellen. Eine andere 54 kann das Prozessgas zur Verfügung stellen. Eine (nicht gezeigte) weitere kann ein anderes Prozessgas zur Verfügung stellen. Eine (auch nicht gezeigte) weitere Leitungsführung kann ein Spülfluid zum Reinigen der stromabwärtigen Komponenten (Leitungsführung 51, Umschalteinrichtung 52) aufweisen, bevor das Werkzeug 10 angeschlossen wird. Die Reinigung kann beispielsweise mittels Durchblasen mit Umgebungsluft erfolgen.

Anders als in Figur 5 gezeigt kann die Umschalteinrichtung 52 auch weiter stromaufwärts sitzen, beispielsweise im Maschinenrahmen 31, also stromaufwärts der Stellglieder 32, so dass nur eine einzige Leitung 51 über die Stellglieder und die Spindel geführt werden muss.

Das Arbeitsverfahren zur Bearbeitung einer Werkstückoberfläche kann dann neben dem eigentlichen Generieren und Zuführen des Plasmas zur Werkstückoberfläche und Führung des Werkzeugs mittels der Maschine über die Werkstückoberfläche auch umfassen, dass vor Einsetzen des Werkzeugs 10 in die Maschine zunächst ein Spülvorgang stattfindet, bei dem Leitungsführungen mit einem Spülfluid (das auch das Prozessfluid/Prozessgas sein kann) durchgespült wird, so dass Residuen anderer Fluide (etwa Kühlmittel) aus den Leitungsführungen der Maschine (insbesondere in der Spindel und stromaufwärts davon) entfernt werden, beispielsweise indem sie ausgeblasen werden. Falls nötig kann dann mittels der Umschalteinrichtung 52 ein gewünschtes Prozessgas ausgewählt werden, indem der gewünschte Einlass mit der auslassseitigen Fluidführung 51 verbunden wird. Vor oder nach diesem Schritt erfolgt das Einsetzen des Werkzeugs 10 in die Werkzeugmaschine, insbesondere durch den automatischen Werkzeughandler, der auch das Werkzeug einem Magazin entnehmen kann.

Zusätzlich zu der bisher beschriebenen Energieversorgung (galvanische kontaktierung und/oder induktiv) oder statt ihrer kann die Energieversorgung auch einen Energiespeicher im Werkzeug aufweisen. Es kann sich z. B. um eine austauschbare, ggf. auch wiederaufladbare Batterie handeln.

Anders als gezeigt kann im Werkstück auch ein Fluidreservoir für das Prozessgas oder -fluid vorgesehen sein. Es kann eine auswechselbare Kartusche und ein entsprechender Anschluss hierfür vorgesehen sein. Ein oder mehrere Flusssteuerungsventile einschließlich einer angepassten und geeigneter Steuerung hierfür können vorgesehen sein. Der Fluidanschluss hin zur Maschine kann dann entfallen.

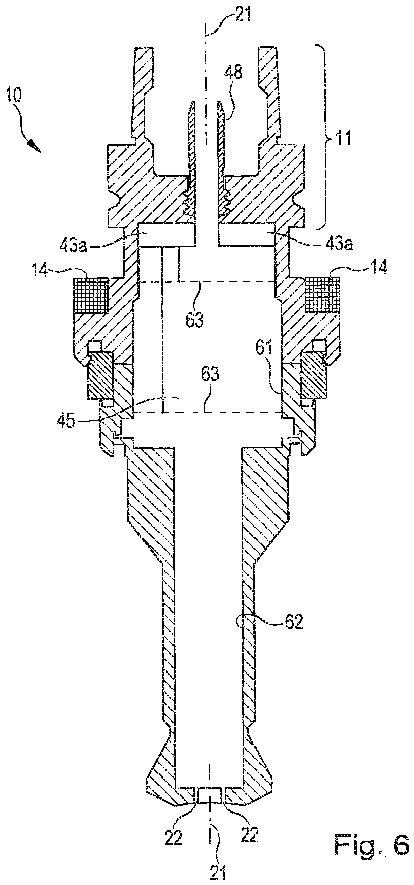

Figur 6 zeigt als schematisches Schnittbild einen gegenüber der Figur 4 abgewandelten inneren Aufbau des Werkzeugs. Allgemein müssen Plasmagenerator 45 und/oder die Leitungsführungen 44 nicht als separate, in das Werkzeuggehäuse eingebaute Komponenten ausgelegt sein, sondern können den Werkzeugkörper bzw. dessen Wandung 61, 62 selbst als Leitungswand 62 und/oder Generatorwand 61 nützen. Im Bereich des Plasmagenerators sind dann im Innenraum des Werkzeugs, der durch den Wandbereich 61 definiert ist, die nötigen elektrischen bzw. elektronischen Einrichtungen und Einbauten vorhanden, die mit 63 symbolisiert sind, um das Plasma zu zünden und stabil generieren zu können. Die stromabwärtige Werkzeugwand 62 selbst kann dann die Leitung zur Führung des Plasmas zum Auslass 22 bilden.

Das Werkzeug der Figuren 1 und 2 kann auch für die Handhabung und Zuführung andererer Fluide oder Partikel als Plasma zu einer Werkstückoberfläche für deren Bearbeitung ausgelegt sein. Es kann allgemein zur Zuführung eines flüssigen oder gasförmigen Fluids oder eines Partikelstroms zu einer Werkstückoberfläche ausgelegt sein. Die Führung 44 ist dann eine Fluid- oder Partikelführung. Die Auslässe 22 sind Fluid- oder Partikelauslässe. Das Fluid kann flüssig oder gasförmig sein. Der Generator kann entfallen oder bedarfsgerecht aufgebaut sein. Er kann eine Fluid- oder Partikelquelle aufweisen, etwa ein Sputtertarget, eine Elektronenquelle oder ähnliches. Er kann auch unmittelbar vor einem Auslass 22 liegen.

Die Verwendung des beschriebenen Werkzeugs 10 ist dementsprechend nicht auf die Plasmabearbeitung einer Werkstückoberfläche beschränkt. Es kann allgemein für Fluidbearbeitungen oder Beschichtungsaufgaben von Werkstücken verwendet werden, bei denen eine Werkstückoberfläche mit einem gasförmigen oder flüssigen Fluid zu bearbeiten, insbesondere zu verändern abzutragen oder aufzubauen ist. Das Fluid kann gasförmig sein, wobei die Atome/Moleküle elektrisch neutral oder ionisiert sein oder als Plasma vorliegen können. Statt eines Plasmagenerators können geeignete andere Leitungsführungen im Werkzeug 10 vorgesehen sein oder andere Generatoren zur Erzeugung der jeweils gewünschten Fluide oder Ionen oder Partikel. Die Steuerung 43b im Werkzeug 10 ist dann an die jeweiligen Gegebenheiten angepasst und kann Steuerungsaufgaben und rückkoppelnde Regelungsaufgaben wahrnehmen. Ansosnten können die Merkmale des Werkzeugs, der Maschine und des Verfahrens wie beschrieben sein.

## Patentansprüche

1. Werkzeug (10) zum Bearbeiten eines Werkstücks in einer Bearbeitungsmaschine, mit
einem im Betrieb maschinenseitigen, vorzugsweise genormten Verbindungsbereich (11) zum Verbinden des Werkzeugs mit einer numerisch gesteuerten Werkzeugmaschine (30),
einer Plasmaführung (44), zum Führen eines Plasmas, und
einem im Betrieb werkstückseitigen, am Ende der Führung (44) liegenden Auslassbereich (13) mit einem oder mehreren Auslässen (22) zum Zuführen des Plasmas zu einer Werkstückoberfläche,
einem im Verbindungsbereich (11) vorgesehenen Prozessgasanschluss (48),
einem Plasmagenerator (45), der mit dem Prozessgasanschluss (48) und der Plasmaführung (44) verbunden ist, und
einer Energiequelle (14, 43) für elektrische Energie für den Plasmagenerator (45), wobei die Energiequelle eine zum induktiven Zusammenwirken mit einer Energiesendespule ausgelegte Energieempfangsspule (14) aufweist.

2. Werkzeug nach Anspruch 1, **dadurch gekennzeichnet, dass** der Prozessgasanschluss (48) zur Verbindung mit einem maschinenseitigen Anschluss (51) ausgelegt ist, der für die Kühlmittelzufuhr verwendbar ist.

3. Werkzeug nach Anspruch 1 oder 2, **dadurch gekennzeichnet, dass** die Energiequelle eine Spule (14) und eine mit ihr verbundene Spannungsformungsschaltung (43a) aufweist.

4. Werkzeug nach einem oder mehreren der vorherigen Ansprüche, mit einer Steuerung (43b), die zum Empfang von Signalen von einer übergeordneten Steuerung (37) und/oder von einem oder mehreren Sensoren (47) und zur Steuerung von Werkzeugkomponenten (45, 46) nach Maßgabe der empfangenen Signale und/oder zum Senden von Signalen an die übergeordnete Steuerung (33) ausgelegt ist.

5. Werkzeug nach Anspruch 4, **dadurch gekennzeichnet, dass** die Steuerung eine Dekodierschaltung aufweist zum Dekodieren von Signalen, die der drahtlos empfangenen Energie überlagert sind.

6. Werkzeug nach einem oder mehreren der vorherigen Ansprüche, mit mehreren Plasmaauslässen (22), deren Plasmazuführkanäle unterschiedlich oder gleich ausgerichtet sind.

7. Werkzeug nach einem oder mehreren der vorherigen Ansprüche, **dadurch gekennzeichnet, dass** der werkstückseitige Auslassbereich (13) eine lösbare und austauschbare Komponente ist.

8. Werkzeug nach einem oder mehreren der vorherigen Ansprüche, mit einem oder mehreren Steuerungsventilen (46) zur Steuerung des Flusses des Prozessgases und/oder des Plasmas.

9. Werkzeug nach einem oder mehreren der vorherigen Ansprüche, **dadurch gekennzeichnet, dass** es zur Handhabung bzw. Erzeugung von Plasma aus Umgebungsluft und/oder zur Handhabung bzw. Erzeugung von Plasma aus einem von mehreren wählbaren Gasen oder Gasgemischen ausgelegt ist.

10. Werkzeug nach Anspruch 1, mit einem Sensor (47) am oder im Plasmagenerator (45).

11. Werkzeugmaschine (30) mit einem Maschinenrahmen (31),
einem Werkzeuganschluss (33) für ein Werkzeug (10) nach einem oder mehreren der vorherigen Ansprüche,
einem Werkstücktisch (35), und
einer numerischen Steuerung (37) für Maschinenkomponenten,
**dadurch gekennzeichnet, dass**
der Werkzeuganschluss einen Prozessgasanschluss (51) für das Werkzeug (10) sowie ein Werkzeug nach einem der vorherigen Ansprüche aufweist.

12. Werkzeugmaschine (30) nach Anspruch 12, wobei der Prozessgasanschluss einen werkzeugseitigen Auslass und eine stromaufwärts vom Auslass gelegene Umschalteinrichtung (52) umfasst, die mit dem Auslass verbunden ist und zur gesteuerten Verbindung des Auslasses mit einer Prozessgasführung (53) oder einer Kühlmittelführung (54) oder ggf. auch einer Spülmittelquelle ausgelegt ist,
wobei eine Reinigungseinrichtung für den Auslass und die Umschalteinrichtung vorgesehen sein.

13. Werkzeugmaschine (30) nach Anspruch 11, mit einem Werkzeugwechsler, so dass das Werkzeug (10) durch den Werkzeugwechsler handhabbar gestaltet werden kann.

14. Verfahren zur Bearbeitung eines Werkstücks in einer Werkzeugmaschine (30) mit einem Werkzeug (10) nach einem oder mehreren der Ansprüche 1 bis 11, bei dem der Werkstückoberfläche mittels des in der Werkzeugmaschine angebrachten Werkzeugs ein Plasma zugeführt wird, wobei das Plasma in einem Plasmagenerator im Werkzeug erzeugt wird und dem Plasmagenerator elektrische Energie über eine induktive Schnittstelle zugeführt wird.

15. Verfahren nach Anspruch 14, bei dem dem Werkzeug das Prozessgas über einen auch für die Kühlmittelzufuhr zu einem Werkzeug verwendeten Anschluss zugeführt wird, wobei in der Werkzeugmaschine eine Umschaltung zwischen Prozessgaszufuhr und Kühlmittelzufuhr nach Maßgabe einer Steuerung (33) stattfindet und wobei vor dem Verbinden des Werkzeugs ein Schritt des Reinigens, insbesondere Durchblasens der maschinenseitigen Zufuhr mit dem Prozessgas oder einem anderen Gas erfolgen kann.

## Claims

1. Tool (10) for machining a work piece in a machine tool, comprising:
a preferably standardised connection portion (11) for connecting the tool with a numerically controlled machine tool (30), the connection portion being positioned on the machine side when in operation,
a plasma duct (44) for conducting a plasma,
and
an outlet portion (13) located at the end of the duct (44), being positioned on the work piece side when in operation, and comprising one or more outlets (22) for supplying the plasma to the surface of a work piece,
a process gas port (48) provided in the connection portion (11),
a plasma generator (45) connected to the process gas port (48) and the plasma duct (44),
and
an energy source (14, 43) providing electric energy for the plasma generator (45), the energy source comprising an energy receiving coil (14) arranged for inductive interaction with an energy transmitter coil.

2. Tool according to claim 1, **characterised in that** the process gas port (48) is arranged for connection with a machine side joint (51) which may be used for coolant supply.

3. Tool according to claim 1 or 2, **characterised in that** the energy source comprises a coil (14) and a voltage forming circuit (43a) connected thereto.

4. Tool according to one or more of the preceding claims, comprising controlling means (43b) arranged for receiving signals from a higher level controller (37) and/or from one or more sensors (47) and for controlling tool components (45, 46) in accordance with the received signals and/or for transmitting signals to the higher level controller (33).

5. Tool according to claim 4, **characterised in that** the controlling means comprise a decoding circuit for decoding signals superposing the wireless-received energy.

6. Tool according to one or more of the preceding claims, comprising several plasma outlets (22), the plasma supply passages thereof being of a different or the same alignment.

7. Tool according to one or more of the preceding claims, **characterised in that** the work piece side outlet portion (13) is a detachable and exchangeable component.

8. Tool according to one or more of the preceding claims, comprising one or more control valves (46) for controlling the flow of the process gas and/or the plasma.

9. Tool according to one or more of the preceding claims, **characterised in that** it is configured for handling and/or generating plasma from ambient air and/or from one or more selectable gases or gas mixtures.

10. Tool according to claim 1, comprising a sensor (47) at or in the plasma generator (45).

11. Machine tool (30), comprising
a machine frame (31),
a tool connector (33) for a tool (10) according to one or more of the preceding claims,
a work piece support (35)
and
a numerical controller (37) for machine components,
**characterised in that**
the tool connector comprises a process gas connection (51) for the tool (10) and a tool according to one of the preceding claims.

12. Machine tool (30) according to claim 12, wherein the process gas connection comprises a tool side outlet and switching means (52) located upstream of the outlet and connected thereto and arranged for a controlled connection of the outlet with a process gas duct (53) or a coolant duct (54) or optionally also with a rinsing agent source,
wherein cleaning means for the outlet and the switching means may be provided.

13. Machine tool (30) according to claim 11, comprising a tool changer so that the tool (10) may be arranged to be manageable by the tool changer.

14. A method for machining a work piece in a machine tool (30) comprising a tool (10) according to one or more of claims 1 to 11, wherein a plasma is supplied to the surface of the work piece by means of the tool mounted in the machine tool, wherein the plasma is generated in a plasma generator within the tool, and electric energy is supplied to the plasma generator through an inductive interface.

15. The method according to claim 14, wherein the process gas is supplied to the tool through a joint also being used for coolant supply to a work piece, wherein a switching between process gas supply and coolant supply is taking place in the machine tool in accordance with a controller (33), and wherein, prior to connecting the tool, a cleaning step may be effected, in particular of blowing-through the machine side supply with the process gas or another gas.

## Revendications

1. Outil (10) destiné à usiner une pièce à usiner dans une machine à usiner, comprenant
une zone de raccordement (11) en fonctionnement côté machine, normée de préférence, pour raccorder l'outil avec une machine-outil à commande numérique (30),
une conduite de plasma (44)
pour acheminer un plasma, et
une zone de sortie (13) en fonctionnement se trouvant côté pièce à usiner, à l'extrémité de la conduite (44), équipée d'une ou de plusieurs sorties (22) pour amener le plasma vers la surface d'une pièce à usiner,
un raccord à gaz de processus (48) prévu dans la zone de raccordement (11),
un générateur de plasma (45) relié au raccord à gaz de processus (48) et à la conduite de plasma (44), et
une source d'énergie (14, 43) produisant l'énergie électrique nécessaire au générateur de plasma (45), cette source d'énergie présentant une bobine réceptrice d'énergie (14) conçue pour l'interaction inductive avec une bobine émettrice d'énergie.

2. Outil selon la revendication 1, **caractérisé en ce que** le raccord à gaz de processus (48) est conçu pour être raccordé avec un raccord (51) côté machine qui peut être utilisé pour l'arrivée de réfrigérant.

3. Outil selon les revendications 1 ou 2, **caractérisé en ce que** la source d'énergie présente une bobine (14) et une commutation de forme de tension (43a) lui étant raccordée.

4. Outil selon l'une quelconque ou plusieurs des revendications précédentes, comprenant une commande (43b) conçue pour recevoir les signaux d'une commande amont (37) et/ou d'un ou de plusieurs capteurs (47) et pour piloter les composants de l'outil (45, 46) en fonction des signaux reçus et/ou pour envoyer des signaux à la commande amont (33).

5. Outil selon la revendication 4, **caractérisé en ce que** la commande présente une commutation de décodage pour décoder les signaux qui sont superposés à l'énergie reçue sans fil.

6. Outil selon l'une quelconque ou plusieurs des revendications précédentes, comprenant plusieurs sorties de plasma (22) dont les conduites de plasma sont orientées de manière identique ou différente.

7. Outil selon l'une quelconque ou plusieurs des revendications précédentes, **caractérisé en ce que** la zone de sortie (13) côté pièce à usiner est un composant détachable et échangeable.

8. Outil selon l'une quelconque ou plusieurs des revendications précédentes, comprenant une ou plusieurs vannes de commande (46) pour piloter le flux du gaz de processus et/ou du plasma.

9. Outil selon l'une quelconque ou plusieurs des revendications précédentes, **caractérisé en ce qu'**il est conçu pour manipuler ou produire du plasma à partir de l'air ambiant et/ou à manipuler ou produire du plasma à partir d'une ou plusieurs gaz ou mélanges gazeux pouvant être choisis.

10. Outil selon la revendication 1, comprenant un capteur (47) placé sur ou dans le générateur de plasma (45.)

11. Machine-outil (30) comprenant
un bâti de machine (31),
un raccord à outil (33) pour un outil (10) selon l'une quelconque ou plusieurs des revendications précédentes,
une table pour la pièce à usiner (35), et
une commande numérique (37) pour les composants de machine,
**caractérisée en ce que**
le raccord à outil présente un raccord à gaz de processus (51) pour l'outil (10) ainsi qu'un outil selon l'une quelconque ou plusieurs des revendications précédentes.

12. Machine-outil (30) selon la revendication 12, dans laquelle le raccordement à gaz de processus comprend une sortie côté outil et un dispositif de commutation (52) situé dans le sens ascendant du flux par rapport à la sortie, relié à la sortie et conçu pour commander le raccordement de la sortie avec une conduite de gaz de processus (53) ou une conduite de réfrigérant (54) ou, le cas échéant, avec une source de produit nettoyant,
un dispositif de nettoyage étant prévu pour la sortie et le dispositif de commutation.

13. Machine-outil (30) selon la revendication 11, comprenant un changeur d'outil conçu de manière à permettre une manipulation aisée de l'outil (10) par le changeur d'outil.

14. Procédé d'usinage d'une pièce à usiner dans une machine-outil (30) avec un outil (10) selon l'une quelconque ou plusieurs des revendications 1 à 11, dans lequel un plasma est amené vers la surface de la pièce à usiner au moyen de l'outil positionné dans la machine-outil, ce plasma étant produit dans un générateur de plasma dans l'outil et une énergie électrique étant amenée au générateur de plasma par le biais d'une interface inductive.

15. Procédé selon la revendication 14, dans lequel le gaz de processus est amené à l'outil par le biais d'un raccord utilisé également pour la conduite de réfrigérant vers un outil, une commutation entre la conduite de gaz de processus et la conduite de réfrigérant ayant lieu dans la machine-outil en fonction d'une commande (33), et une étape de nettoyage pouvant être effectuée avant le raccordement de l'outil, en particulier le soufflage de la conduite côté machine avec le gaz de processus ou un autre gaz.
